# EUROPÄISCHE PATENTSCHRIFT

(11) **EP 2 385 322 B1**
(45) Veröffentlichungstag und Bekanntmachung des Hinweises auf die Patenterteilung: **30.11.2016**
(21) Anmeldenummer: 11400019.3
(22) Anmeldetag: 08.03.2011
(51) Int. Cl.: F24J 2/46, F24J 2/40

(54) **Vorrichtung zum Entfernen von zumindest Schnee-oder Eisbelag auf zumindest einem Sonnenkollektor**
Device for removing at least ice or snow cover from at least one solar collector
Dispositif de suppression d'au moins une couche de neige ou de glace sur au moins un collecteur solaire

(30) Priorität: 16.03.2010 DE 202010004116 U
(43) Veröffentlichungstag der Anmeldung: 09.11.2011
(73) Patentinhaber: Dr. Franke + Dr. Hitzler Entwicklungen UG (haftungsbeschränkt) & Co. KG, 38102 Braunschweig (DE)
(72) Erfinder: Franke, Stefanie, 38154 Königslutter (DE); Hitzler, Wilfried, 89551 Königsbronn (DE)

(56) Entgegenhaltungen:
- DE-A1- 10 013 989
- DE-U1- 20 203 181
- DE-U1-202007 009 076

## Beschreibung

Die Erfindung betrifft eine Vorrichtung zum Entfernen von zumindest Schnee- oder Eisbelag auf zumindest einem Sonnenkollektor mit zumindest einem Element zum Abtrag von Schnee- oder Eisbelag, welches über zumindest eine Teilfläche des Sonnenkollektors geführt ist, nach dem Oberbegriff des Patentanspruches 1.

Sonnenstrahlung, die auf die Erdoberfläche auftrifft, lässt sich neben mittels konvektiv arbeitenden Kraftwerken vor allem in thermischen Anlagen oder Photovoltaikanlagen nutzen. Dabei wird die Strahlungsenergie der Sonne durch sogenannte Sonnenkollektoren eingefangen. Die Sonnenkollektoren können die Sonnenenergie thermisch nutzen, indem beispielsweise ein Gas oder eine Flüssigkeit erwärmt wird und die darin gespeicherte Wärmeenergie an Verbraucher verteilt oder gespeichert wird. Im Falle einer photovoltaischen Nutzung kann die Strahlungsenergie der Sonne mit Hilfe von Halbleiter-Solarzellen direkt in elektrische Energie umgewandelt werden und beispielsweise mit Hilfe von Wechselrichtern an Verbrauchersysteme angepasst werden.

Die Sonnenkollektoren sowohl der thermischen als auch der photovoltaischen Bauart sind hinsichtlich ihrer Geometrie plattenförmig ausgebildet. Mit Hilfe von derartigen Einzelplatten kann eine Dachfläche von geneigten oder auch horizontalen Dächern von Gebäuden ausgestattet und abgedeckt werden. Dabei ist eine der Sonne exponierte Seite eines Sonnenkollektors flach und eben gebildet und als Schutz- oder Deckplatte transparent ausgeführt.

Da Solaranlagen bzw. deren Sonnenkollektoren oder Solarmodule zumeist im Freien aufgestellt sind, sind sie der verschiedenartigsten Bewitterung ausgesetzt. So treten Verschmutzungen durch Auftrag von Athmosphärilien ebenso auf, wie Schnee- oder Eisbelag.

Insbesondere wird durch einen Schneebelag oder Eisbelag in den Wintermonaten und/oder insbesondere während der anderen Jahreszeiten durch Staub oder Laubbelag oder Belag der Sonnenkollektoren durch sonstigen Schmutz ein Teil der Sonnenstrahlung bereits an der Schmutz-, Schnee- oder Eisoberfläche bzw. Oberfläche anderer Beläge reflektiert und nur ein geringerer Teil der Sonnenstrahlung erreicht die Kollektorfläche zur Energiewandlung oder zum Energieübertritt. Dadurch sinkt der Wirkungsgrad einer gesamten Solaranlage zum Teil beträchtlich (25-50%) gesehen über die Jahresenergieausbeute. Darüber hinaus wird bei Solarmodulen, die photovoltaisch arbeiten und im Wesentlichen aus kristallinem Silizium bestehen, durch eine intensive Sonneneinstrahlung und eine gegebenenfalls von mikroklimatischen Faktoren bestimmte, zu hohe Außentemperatur insbesondere in den Sommermonaten, die Temperatur des Siliziums über die optimale Betriebstemperatur hinaus erhöht. Dies wirkt sich negativ auf den Wirkungsgrad der Gesamtanlage aus.

Es sind bereits verschiedene Vorrichtungen zum Entfernen von solchen genannten, die Energieausbeute von Solaranlagen schmälernden Einflussfaktoren aus dem Stand der Technik bekannt. Die Vorrichtungen haben jeweils singuläre Wirkmechanismen, wie mechanische oder thermische oder physikalisch-chemische Wirkmechanismen.

Die DE 103 20 347 B4 zeigt und beschreibt ein Verfahren zum Betreiben einer Solaranlage mit wenigstens einer nicht waagerechten Solarfläche, bei der zum Erreichen eines bestmöglichen Wirkungsgrades der Solaranlage ein Konditionierungsmittel auf eine Solarfläche aufgebracht wird. Das Konditionierungsmittel ist als Gefrierschutz- oder Frostschutzmittel vorgesehen, welches eine die Eisbildung hemmende Wirkung oder eine abtauende Wirkung auf einen vorhandenen Eis- oder Schneebelag haben soll. Das Konditionierungsmittel wird zweckmäßigerweise am Einsatzort bzw. Standort der Solaranlage oder der Sonnenkollektoren aufgebracht, um einer Ursache einer vorübergehenden Beeinträchtigung der Betriebsbedingungen entsprechend schnell und wirksam entgegentreten zu können.

Die DE 10 2005 013 696 B3 beschreibt eine ausschließlich mechanisch arbeitende Vorrichtung zum Entfernen von Schnee auf Dachflächen und im Besonderen Photovoltaik-Dachflächen zur besseren Nutzbarmachung der Photovoltaik-Anlage. Über ein vom Boden aus bedienbares Seilzugsystem wird ein nach unten offener Räumkörper über die Dachfläche mit Sonnenkollektoren gezogen, wobei eine Keilform des Räumkörpers so ausgebildet ist, dass der Keilboden bei einer Abwärtsbewegung des Räumkörpers Schnee mitnimmt. Die vertikale Position und die seitliche Position des Räumkörpers wird von Endlosseilen, die über Umlenkrollen laufen, bestimmt.

Die DE 20 2009 000 475 U1 beschreibt ausschließlich eine Reinigungsanlage für Solaranlagen, wie Sonnenkollektoren und Solarmodule, wobei eine stab- oder flächenförmige Reinigungsvorrichtung mit textilen Lagen eines Stoffes ausgestattet ist, die flexibel gebildet sind aber dennoch in der Lage ist, über eine Sonnenkollektorfläche zu gleiten und diese unter Zufuhr von Reinigungsflüssigkeit flächig von Schmutz zu reinigen. Die Reinigungsvorrichtung wird manuell bedient und kann an einer Teleskopvorrichtung angebracht sein um, ohne dass ein Dach bestiegen werden muss, um die Reinigung von Sonnenkollektoren vorzunehmen.

DE 100 13 989 A1 beschreibt eine Vorrichtung zum Reinigen von Flächen von Photovoltaikmodulen und Solarkollektoren, wobei ein Ausleger, der mit Gummilippen oder dergleichen an einer mittels Motorkraft angetriebenen Transportkette translatorisch jedoch nicht rotatorisch über die Flächen bewegt wird.

Die DE 202 03 181 U1 beschreibt ein mechanisches Fensterreinigungsgerät mit einem Teleskoparm das für die Reinigung von Fenstern jeglicher Form geeignet ist. Der Teleskoparm kann translatorisch oder rotatorisch über die Fenster geführt werden.

Die DE 20 2007 009 076 U1 beschreibt eine Gebäudefenster-Reinigungsanlage für geschlossene Fenster. Ein mit einer Gummilippe versehener, geführter Scheibenwischer übt mit einem Elektrogetriebemotor über einen Seil- oder Riemenantrieb angetrieben, eine Reinigungshubbewegung oder eine Teilkreis-Drehbewegung aus.

Die gattungsgemäßen Vorrichtungen sind Speziallösungen, die insgesamt keine sichere und komfortable Beseitigung von, die Energieausbeute einer Solaranlage schmälernden Witterungseinflüssen über alle Jahreszeiten ermöglichen.

Ausgehend von diesem Stand der Technik liegt der Erfindung die Aufgabe zugrunde, eine Vorrichtung zum Entfernen von zumindest Schnee- oder Eisbelag auf Sonnenkollektoren anzugeben, die kostengünstig und funktionssicher darstellbar ist und deren Funktion auf eine Reinigung von Solarkollektoren erweiterbar ist.

Die Aufgabe wird mit einer Vorrichtung mit den Merkmalen des Patentanspruchs 1 in seiner Gesamtheit gelöst.

Dadurch, dass ein Element der Vorrichtung zum Abtrag von Schnee- und Eisbelag in der Art eines Wischerarmes oder Scheibenwischerarmes gebildet ist - man denke an Scheibenwischerarme samt Wischerblatt eines Nutzkraftfahrzeugs - und der Wischerarm von einem Servomotor, vorzugsweise einem Elektromotor mit vorzugsweise einem Untersetzungsgetriebe angetrieben ist und sowohl eine translatorische als auch eine rotatorische Bewegung über zumindest eine Teilfläche oder die gesamte Fläche des Solarkollektors in der Lage ist auszuführen, ist eine konstruktive Maßnahme gewählt, vorzugsweise bekannte und erprobte Bauelemente des Fahrzeugbaus zum Entfernen von Schnee- oder Eisbelag von Sonnenkollektoren zu verwenden oder in modifizierter Form zu verwenden. Es ist ein telekopierbares Teil des Wischerarmes von einer Telekopiereinrichtung mit einem zweiten Servomotor längsverschiebbar angetrieben. Der telekopierbare Teil des Wischerarmes ist relativ zu einem von dem ersten Servomotor angetriebenen Abschnitt des Wischerarmes längsverschiebbar. Solche Vorrichtungen in der Art von Fahrzeug-Scheibenwischeranlagen haben sich seit Jahrzehnten in allen Klimazonen der Erde als wirkungsvoll erwiesen. Eine an die geometrischen Gegebenheiten und die vereinfachten Bedingungen bei einer Schnee- und Eisfreihaltung von statischen unbewegten Flächen, wie dies bei Sonnenkollektoren der Fall ist, angepasste Vorrichtung ist kostengünstig in großen Stückzahlen darstellbar. Ähnlich wie in großen Mengen hergestellte Zulieferkomponenten in der Art von Scheibenwischeranlagen von Kraftfahrzeugen.

Bevorzugte Ausführungsbeispiele ergeben sich aus den Unteransprüchen.

In einem besonders bevorzugten Ausführungsbeispiel der Vorrichtung ist der den oder eine Mehrzahl an Wischerarmen antreibende Servomotor als Gleichstrommotor zur Bereitstellung eines im Wesentlichen konstanten Drehmoments und einer Drehzahl gebildet. Es kann auch zweckmäßig sein, einen Asynchronmotor als Antrieb zu wählen. Zudem kann anstelle eines gleichförmigen, ungesteuerten Betriebes des Elektromotors eine Drehzahl- oder Drehrichtungssteuerung mit einer Drehrichtungsumkehrmöglichkeit des Elektromotors beispielsweise in der Art einer Pulsweitensteuerung vorgesehen sein.

Eine Ausgangswelle oder Welle des Elektromotors ist vorzugsweise Eingangsglied eines Untersetzungsgetriebes, dessen Ausgangsglied wiederum mit dem Wischerarm oder dem bewegbaren Element der Vorrichtung verbunden ist. Das Untersetzungsgetriebe kann als Schneckenradgetriebe gebildet sein und dessen Gehäuse eine Einheit mit dem Elektromotor bilden. Es lassen sich weitere vorteilhafte Getriebebauarten anwenden, um beispielsweise die Drehzahl eines sehr klein bauenden, eine geringe Leistungsaufnahme und eine hohe Drehzahl aufweisenden, bzw. abgebenden Elektromotors für den Antrieb des Elementes oder Wischerarmes der Vorrichtung heranziehen. So kann es zweckmäßig sein, ein Getriebe mit zumindest einem Hohlradpaarsystem (ICONA-Getriebe) anzuwenden oder ein Planetenradgetriebe oder ein Wellgetriebe (harmonic-drive) anzuwenden. Die lediglich beispielhaft genannten Getriebebauarten ermöglichen eine sehr bauraumsparende Darstellung insbesondere einer witterungsfesten Einheit aus Elektromotor und Untersetzungsgetriebe in der Art einer kompakten Aktuatoreinheit mit Motorsteuerung. Dadurch lässt sich die Antriebskomponente der Vorrichtung zum Entfernen von zumindest Schnee- oder Eisbelag auf kleinstem Raum - etwa auf der Rückseite von Sonnenkollektoren und insbesondere im Verschneidungsbereich von mehreren Sonnenkollektoren einer Solaranlage anordnen. Um eine zu der rotatorischen Bewegung des Wischerarmes vorgesehene translatorische Bewegung des Wischerarmes zu ermöglichen und damit nahezu vollständig auch die übliche eckige oder rechteckförmige Form von Sonnenkollektoren bestreichen zu können, kann eine Kulissenführung mit Teleskopiermöglichkeit des Wischerarmes vorgesehen sein. Es kann auch zweckmäßig sein, ein Kurvengetriebe dem Untersetzungsgetriebe nachzulagern, sodass der Wischerarm eine an die Grundflächengestalt des zu reinigenden und von Schnee- und Eisbelag zu befreienden Sonnenkollektors angepasste rotatorische und translatorische Bewegung ausführen kann.

Dabei kann es vorteilhaft sein, dass der zweite Servomotor den teleskopierbaren Teil des Wischerarmes über eine Bewegungsschraube antreibt.

Der Betrieb der Vorrichtung kann im Winter auf einfachste Weise durch eine Bedienperson gestartet und gestoppt werden, wobei während der Betriebsphase ein intermittierender mit starren Pause- und Betriebsintervallen charakterisierter Betrieb des Elektromotors möglich ist. Es kann auch eine Steuer- und/oder Regelungseinrichtung für den Betrieb des Elektromotors vorgesehen sein, die einen an die aktuellen Witterungsverhältnisse angepassten, adaptiven Betrieb des Elektromotors der Vorrichtung oder weiterer Baueinheiten wie Pumpen für Konditionierungsmittel und dergleichen vorsieht. Es ist somit auch ein vollautomatischer Betrieb der Vorrichtung möglich.

Dabei ist es zweckmäßig, die Steuerung des Elektromotors nach Maßgabe von Sensorsignalen eines Feuchtesensors und/oder Temperatursensors und/oder eines Sensors zur Erkennung fallenden Niederschlages auf oder an dem Sonnenkollektor vorzunehmen. Es kann auch zweckmäßig sein, in die Steuerung einen Zeitgeber einzubeziehen, der Tageszeit und Betriebsintervallzeit der Vorrichtung angibt. Es kann zweckmäßig sein, den Betrieb der Vorrichtung anhand von spezifischen, in einem Speicherbaustein der Steuerung abgelegten, mikroklimatischen Daten zu steuern. Hierbei ist insbesondere eine vorangehende Abfrage der Sensorsignale des Temperatursensors und anschließend des Feuchtesensors sinnvoll. Der Zeitgeber dient auch als Istwertgeber für die Tageszeit dahingehend, ob überhaupt ein Energiegewinn durch den Sonnenkollektor erzielbar ist und ob es daher sinnvoll ist, etwa bei geringem Schnee- oder Eisbelag, die Vorrichtung beispielsweise nachts in Betrieb zu setzen oder nicht. Die Gesamtenergiebilanz einer mit der erfindungsgemäßen Vorrichtung versehenen Solaranlage ist dadurch günstig zu beeinflussen. In dem Speicher oder Speicherbaustein lassen sich auch Steuerungsprogramme für die Geschwindigkeiten der Bewegung des Wischerarmes oder Elements der Vorrichtung abspeichern, wobei die Winkelgeschwindigkeit eines Wischerarmes der Vorrichtung geringer sein kann als bei Kraftfahrzeugen üblich. Zudem lassen sich darin eine Vielzahl an Betriebsprogrammen insbesondere deren Pause-Betrieb-Intervalle abspeichern und etwa von einem Mikroprozessor einer Recheneinheit der Steuer- und/oder Regelungseinrichtung abfragen.

Es kann gleichwohl zweckmäßig sein, anstatt oder zusätzlich zu einem Feuchtesensor mit kapazitiver, konduktiver oder thermischer Funktionsweise einen Sensor zur Detektion von direkt fallendem Niederschlag, der unabhängig von sonstiger Feuchte an dem Sonnenkollektor misst, vorzusehen. Dies ist beispielsweise mit einem Radarsensor mit einem Sender und einem Empfänger im Mikrowellen- oder Radarwellenbereich der Fall.

In einer besonders bevorzugten Ausführungsform wird die sogenannte Dopplerverschiebung zwischen dem Sende- und Empfangssignal ausgewertet. Diesem Verfahren liegt das Phänomen zugrunde, dass bei einer Reflexion an bewegten Oberflächen eine Frequenzverschiebung erfolgt. Die Frequenzdifferenz zwischen dem Sende- und dem Empfängersignal gibt folgerichtig Aufschluss über die Geschwindigkeit der bewegten Reflexionsfläche. Somit lässt sich auf diese Weise eine fallende Reflexionsfläche, wie die Oberfläche einer Schneeflocke oder eines Regentropfens oder eines Hagelkorns sehr gut von im Bezug zum Radarsensor ortsfesten Reflexionsflächen unterscheiden. Die Auswertungen der Signale des Radarsensors können auch hinsichtlich der Signalform und nicht nur im Bezug auf den Phasenversatz vorgenommen werden. Dadurch lassen sich Niederschlagsarten bestimmen. Die Amplitude oder die Impulszahl des Empfängersignals lässt auf die Intensität des Niederschlages schließen.

Die Vorrichtung und insbesondere das als Wischerarm vorzugsweise gebildete Element, welches über den Sonnenkollektor bewegt wird, kann zusätzlich zum Abtrag von Schnee- und Eisbelag auch zur Reinigung der bewitterten Oberfläche des Sonnenkollektors dienen, indem an dem Wischerarm verschiedenartige Räum- oder Reinigungswerkzeuge angebracht sind. So können über die Länge des Wischerarmes beispielsweise Kunststoff-Schabewerkzeuge oder eine Gummilippe oder ein Textil- oder anderweitiger Faserbesatz zum Ablösen oder Abwischen von Schmutz angebracht sein. Die Vorrichtung zum Entfernen von Schnee- oder Eisbelag kann auch eine Einrichtung zum Auftragen eines Konditionierungsmittels umfassen. Das Konditionierungsmittel kann ein flüssiges Reinigungsmittel zum Lösen von Schmutz auf dem Sonnenkollektor sein. Es kann auch zweckmäßig sein, ein Gefrierschutz- oder Taumittel anzuwenden, insbesondere eine wässrige Lösung von NaCl. Dies stellt eine sehr kostengünstige Lösung einer Abtauhilfe dar. Alternativ ist eine glycolhaltige Flüssigkeit anwendbar oder ein Beschlagverhinderungsmittel wie Glycerin oder Propylenglycol. Durch Verdunsten von Beschlagverhinderungsmitteln entsteht beispielsweise ein dünner Glycol-Film, dessen Gefrierpunkt weit unter 0°C liegt, sodass eine Eisbesatz-Präventionsmaßnahme bei einem Auftrag solcher Konditionierungsmittel getroffen ist.

Um eine Wirkungsgrad-Verbesserung einer photovoltaischen Solaranlage zu bewirken, kann es zweckmäßig sein, durch den Auftrag von Kühlmittel als Konditionierungsmittel eine zu hohe Temperatur insbesondere der unter einer Schutz- oder Deckplatte befindlichen Siliziumscheiben zu vermeiden. Dadurch lässt sich eine günstigere, niedrigere Betriebstemperatur der Solaranlage einstellen. Als Kühlmittel kann kalk- oder ionenfreies Wasser angewandt werden. Es ergibt sich bei einem regelmäßigen Auftrag von Kühlmittel eine Verdunstungskühlung. Kalkfreies Wasser steht ohnehin an jeder Dachfläche in Form von Regenwasser zur Verfügung. Auch zur Aufbringung und Verteilung von Konditionierungsmittel kann ein über die Solarkollektorfläche bewegtes Element oder ein Wischerarm zwischen zwei, über seine axiale Erstreckung angeordnete Räumwerkzeuge gegen Eis und Schnee ein oder mehrere Reinigungswerkzeuge über seine axiale Erstreckung aufweisen. Auf das Reinigungswerkzeug lässt sich Konditionierungsmittel aufbringen, etwa durch ein System von Scheibenwaschpumpen oder dergleichen kostengünstige Rollenpumpen, die Konditionierungsmittel über flexible Leitungen dem Reinigungswerkzeug zuführen. Das Reinigungswerkzeug kann ein Streifen oder eine Fläche aus Textilfasern oder Bürsten oder in geeigneter Weise als Polmaterial gebildetes Element mit einer Hoch-Tiefstruktur sein. Das Reinigungswerkzeug und auch das Räumwerkzeug zum Abtrag von Schnee und Eis kann austauschbar an dem Wischerarm, etwa durch Klettverschlüsse, angebracht werden. Es kann auch zweckmäßig sein, zum Wechsel von Reinigungswerkzeug- auf Räumwerkzeugbetrieb den Wischerarm oder das über den Sonnenkollektor bewegbare Element um seine Längsachse schwenkbar zu gestalten.

Das Konditionierungsmittel kann auch durch eine separate Sprüheinrichtung aufbringbar sein und in einem geschlossenen Kreislauf über den Sonnenkollektor geführt werden. Es ist dadurch vorteilhaft, ein Auffang-Rinnensystem an dem Sonnenkollektor oder der Mehrzahl von Sonnenkollektoren vorzusehen.

Der Elektromotor für den Antrieb des Wischerarmes kann gleichwohl zum Antrieb mehrerer Wischerarme vorgesehen sein, insbesondere wenn lediglich eine rotatorische Bewegung der Wischerarme über eine Mehrzahl, beispielsweise zwei oder vier Sonnenkollektoren vorgesehen ist. Während des Betriebes der Vorrichtung kann die Drehrichtung des Elektromotors geändert werden.

Die Erfindung ist nachfolgend anhand eines Ausführungsbeispiels beschrieben und anhand der Zeichnung gezeigt. In der Zeichnung zeigen:
- Fig.1: eine schematische, nicht maßstäbliche perspektivische Ansicht einer Vorrichtung zum Entfernen von Schnee- oder Eisbelag auf einem Sonnenkollektor und zum Aufbringen von Konditionierungsmittel,
- Fig. 2: eine schematische, nicht maßstäbliche perspektivische Ansicht einer Vorrichtung zum Entfernen von Schnee- oder Eisbelag für vier Sonnenkollektoren einer photovoltaischen Solaranlage,
- Fig. 3: eine Einzeleinheit III in Fig. 2,
- Fig. 4: einen schematischen, nicht maßstäblichen Querschnitt durch ein als Wischerarm gebildetes Element zum Abtrag von Schnee- und Eisbelag von einem Sonnenkollektor,
- Fig. 5: eine schematische Ansicht eines Räumwerkzeuges an dem Wischerarm in Fig. 4,
- Fig. 6: einen schematischen, teilweisen, nicht maßstäblichen Längsschnitt und eine Seitenansicht einer Vorrichtung zum Entfernen von Schnee- oder Eisbelag auf einem Sonnenkollektor.

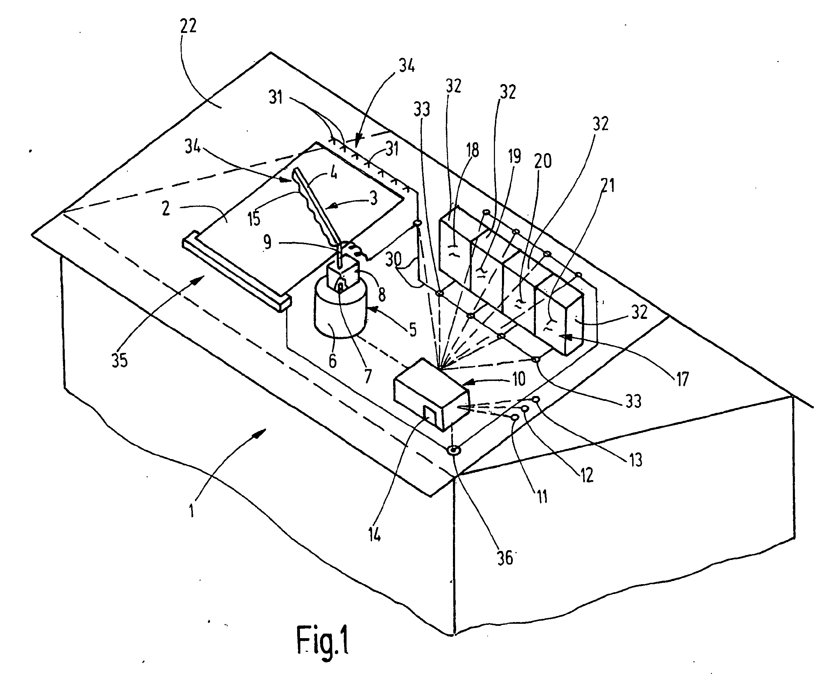

In Fig. 1 ist in einer perspektivischen, schematisierten Ansicht eine Vorrichtung 1 zum Entfernen von Schnee- und Eisbelag von einem als photovoltaisch arbeitenden Sonnenkollektor 2 gezeigt. Die Vorrichtung 1 ist in dem in Fig. 1 gezeigten Ausführungsbeispiel für die Anwendung von auf einer Dachfläche 22 eines Gebäudes 23 montierten Sonnenkollektoren 2 gezeigt. Grundsätzlich eignet sich die Vorrichtung 1 auch zur Entfernung von Schnee- und Eisbelag auf auf Bodenflächen oder ebenen Dachflächen montierten Sonnenkollektoren 2. Das Ausführungsbeispiel zeigt lediglich einen von der Vielzahl zu einer Solaranlage gehörenden Sonnenkollektoren 2 oder Solarzellen, die in an sich bekannter Weise mit Hilfe von Befestigungsvorrichtungen in der Art von Aluminium-Profilstangen an der geneigten Dachfläche 22 des Gebäudes 23 festgelegt sind.

Die Sonnenkollektoren 2 sind parallel zu der Dachfläche 22 angeordnet und sinnfällig an der Sonnenseite des Gebäudes 23 angeordnet.

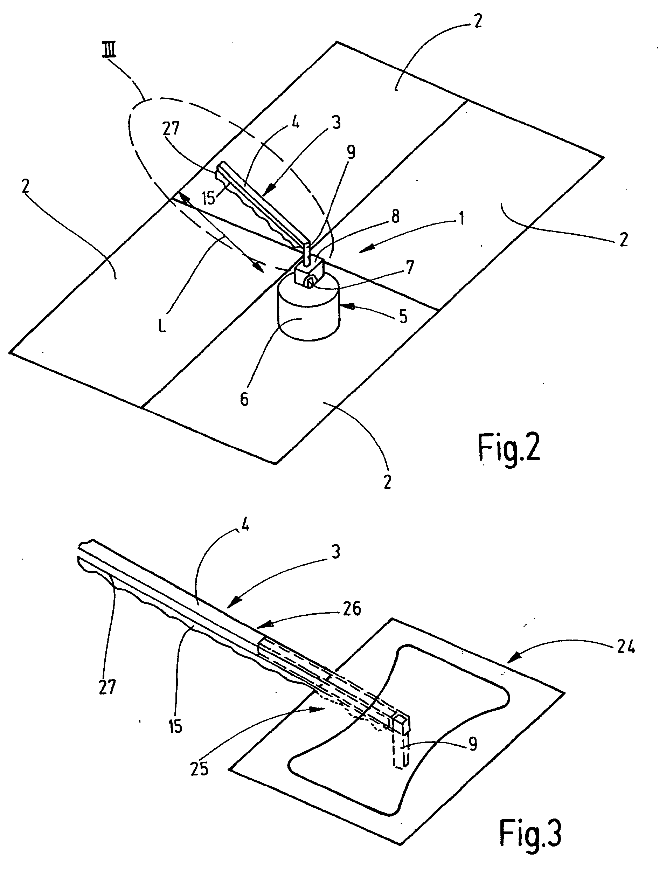

Die Vorrichtung 1 weist ein als teleskopierbaren Wischerarm 4 gebildetes Element 3 zum Abtrag von Schnee- oder Eisbelag auf, das in den Figuren 3 bis 6 im Detail näher gezeigt ist. Der Wischerarm 4 wird von einem als Gleichstromelektromotor 6 gebildeten ersten Servomotor 5 in der Art eines Kraftfahrzeug-Scheibenwischers rotatorisch angetrieben. Der Wischerarm 4 ist nicht unmittelbar an einer Welle 7 des Elektromotors 6 drehfest angeordnet. Vielmehr treibt der Elektromotor 6 ein hochuntersetzendes Untersetzungsgetriebe 8 an, an dessen Ausgangsglied 9 in Form eines Wellenstummels der Wischerarm 4 drehfest festgelegt ist. Da der Elektromotor 6 ein mit hoher Drehzahl drehender Gleichstrommotor mit starrer Drehzahl ist, dessen Leistungsaufnahme weniger als 100 W beträgt, ist hierbei das Untersetzungsgetriebe 8 als Hohlradpaarsystem oder als Wellgetriebe (harmonic-drive) gebildet. Solche Getriebe ermöglichen auf kleinstem Raum eine Drehzahlreduktion von mehreren tausend Umdrehungen verbunden mit einer für die Zwecke der Schnee- oder Eisräumung verbundenen, deutlichen Drehmomentsteigerung. Der Wischerarm 4 ist in geeigneter Weise in Richtung auf die Oberfläche des Sonnenkollektors 2 vorgespannt.

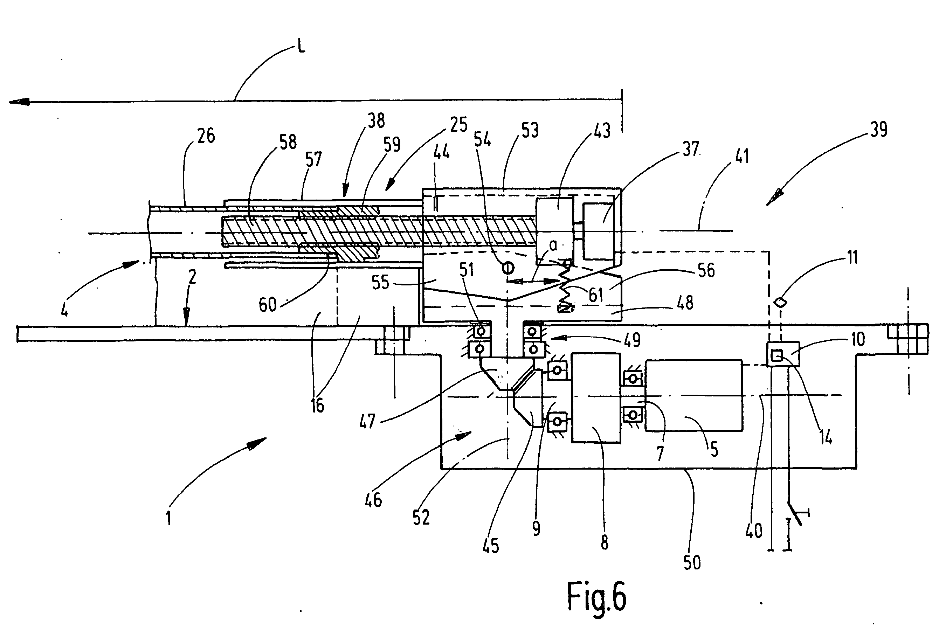

Wie Fig. 3 verdeutlicht, kann der Wischerarm 4 durch ein Kurvengetriebe oder wie in dem Ausführungsbeispiel gezeigt, mit einer Kulissenführung 24 verbunden mit einer Teleskopiereinrichtung 25 im Wesentlichen die gesamte rechteckige Fläche eines oder mehrerer, insbesondere von vier Sonnenkollektoren 2 bestreichen. Die Kulissenführung 24 ermöglicht somit eine translatorische Bewegung des Wischerarmes 4. Dabei ist es zweckmäßig, den Servomotor 5, das Untersetzungsgetriebe 8 unter dem Sonnenkollektor 2 und der Dachfläche 22 anzuordnen. Die translatorische Bewegung des Wischerarmes 4 kann auch durch andere konstruktive Maßnahmen, wie elektronisch angesteuerte Servomotoren oder Linearmotoren realisiert sein, die ein teleskopierbares Teil 26 des Wischerarmes 4 verschieben (vgl. Fig. 6).

In einer einfachen Ausführungsform ist der Betrieb des Elektromotors 6 durch eine Steuer- und/oder Regelungseinrichtung 10 mit festen Pause-Betriebs-Intervallen darstellbar, wobei die einzelnen Intervall-Anteile im Rahmen mehrerer, vorzugsweise durch eine Eingabeeinrichtung vorwählbarer Programme erfolgen kann.

Die Programmwahl kann täglich, insbesondere in Abhängigkeit einer Wetterprognose von einer Bedienperson geändert werden. Der Betrieb der Vorrichtung 1 lässt sich von der Bedienperson jederzeit starten und stoppen. Es versteht sich, dass eine Not-Haltefunktion bei der Steuer- und/oder Regelungseinrichtung 10 vorgesehen ist, die insbesondere bei einer Blockade des Wischerarmes 4 oder Elementes 3 anspricht.

Mit Hilfe der Steuer- und/oder Regelungseinrichtung 10 ist zudem ein vollautomatischer, an die jeweiligen aktuellen Witterungsbedingungen angepasster Betrieb der Vorrichtung 1 möglich. Zu diesem Zweck ist die Steuer- und/oder Regelungseinrichtung 10 von einem Temperatursensor 11, einem Feuchtesensor 12 und einem Sensor 13 für fallenden Niederschlag angesteuert. Feuchtesensoren in der Art von kapazitiven, konduktiven oder mit einem thermischen Messverfahren messenden Sensoren sind allein nicht in der Lage, ein aktuelles Bild eines Niederschlages auf dem Sonnenkollektor 2 darzustellen. Vielmehr bedarf es neben einem Temperatursensor, der als Indikator für eine mögliche Eisbelagsbildung dienen kann, eines Sensors zur Detektion fallenden Niederschlages, wie eines Radarsensors. Mit Hilfe von Mikrowellen bzw. Radarwellen ist es möglich, reflektierende Grenzflächen, beispielsweise von Regentropfen oder Schneeflocken zu detektieren. Auch Pollenflug auf Solarkollektoren, der leistungsmindernd wirken kann, kann so detektiert werden. Gleiches gilt für andere luftgetragene, den Sonnenkollektor 2 verschmutzende Partikel (Athmosphärilien). Mit Hilfe einer Frequenzanalyse des Empfangssignales ist eine Unterscheidung verschiedener Reflexionsflächen und damit Partikelarten möglich. Die Frequenzdifferenz durch Reflexion der Messfrequenz gibt Aufschluss über die Geschwindigkeit der Partikel (Schnee, Regen, Graupel etc.). Durch die Überwachung der Amplitude oder Impulszahl des Empfangssignals kann die Intensität des Niederschlages erfasst werden. Anhand der Sensorsignale lassen sich in einem Speicher 14 der Steuer- und/oder Regelungseinrichtung 10 abgespeicherte Betriebsprogramme, etwa von einem Mikroprozessor (CPU) abrufen und zur Ansteuerung des Elektromotors 6 umsetzen.

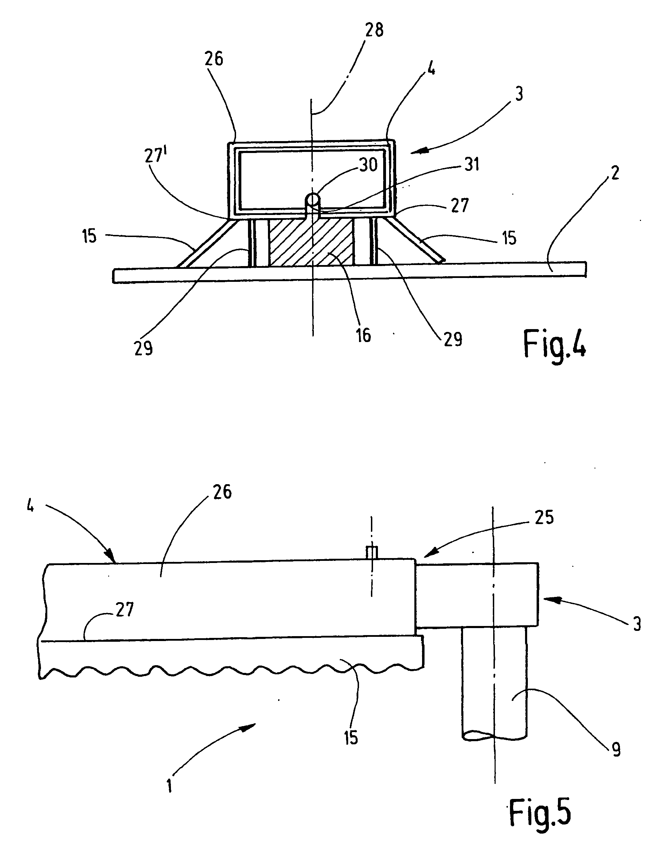

Wie insbesondere die Figuren 4 bis 6 zeigen, ist die Vorrichtung 1 nicht nur geeignet, Schnee- und Eisbelag mit Hilfe von streifenförmigen Räumwerkzeugen 15, die über die axiale Erstreckung L des Wischerarmes 4 zu beiden Rändern 27, 27' des Wischerarmes 4 angeordnet sind, abzutragen. Der Wischerarm 4 weist auch ein Reinigungswerkzeug 16 auf, mit Hilfe dessen Konditionierungsmittel 17 in flüssiger Form auf die Fläche des Sonnenkollektors 2 aufbringbar ist. Das Reinigungswerkzeug 16 ist als Streifen eines textilen Fasergebildes ausgebildet. Es können natürliche oder synthetische Fasern (Mikrofaser, Polyamid, Polyester, Polypropylen) zur Anwendung kommen. Beispielsweise kann das Reinigungswerkzeug 16 in der Art eines Filzstreifens oder Schaumstoffstreifens oder als Matten- oder Gewebestapelstreifen gebildet sein. Es kann als Polmaterial eine Hoch-Tief-Struktur aufweisen, wobei der jeweils hochstehende Pol eine besonders schmutzabtragende Funktion haben kann.

Wie Fig. 4 und 5 zeigen, können jeweils ein Streifen eines gezahnten, zähelastischen Kunststoffmaterials mit einer 45° Neigung zu dem Sonnenkollektor 2 entlang eines jeden Randes 27, 27' des Wischerarmes 4 als Räum- oder Kratzwerkzeug 15 für Schnee- und Eisbelag dienen. Derartige Räumwerkzeuge 15 sind auch in der Lage, Sonnenkollektoren, die mit flachen Randprofilen umsäumt sind, zu überstreichen, abgesehen, davon, dass mittlerweile häufig Sonnenkollektoren 2 ohne erhöhte Randprofile verbaut werden.

In Blickrichtung zu einer Längsmittelebene 28 des Wischerarmes 4 schließen sich zu beiden Seiten je ein oder mehrere etwa parallel verlaufende Abstreifwerkzeuge 29 in Form von Gummilippen an. Diese Abstreifwerkzeuge 29 können zur Nachreinigung in Bezug auf die Räumwerkzeuge 15 dienen. Zwischen den Abstreifwerkzeugen 29 ist wiederum das streifenförmige Reinigungswerkzeug 16 angeordnet.

Der Wischerarm 4, der als Blech-Umformteil oder als faserverstärktes Kunststoffprofil gebildet sein kann, kann mit einer Zuführleitung 30 für Konditionierungsmittel 17 verbunden sein. Insbesondere kann die Zuführleitung 30 an oder in dem Reinigungswerkzeug 16 angeordnet sein und über mehrere Öffnungen 31, die zueinander beabstandet sind, Konditionierungsmittel 17 direkt auf den Sonnenkollektor 2 oder an oder in das Reinigungswerkzeug 16 führen.

Wie Fig. 1 zeigt, können verschiedene Arten von Konditionierungsmittel in Behältern 32 vorgehalten werden und über insbesondere Schwerkraft und durch ein Leitungsnetz von zumindest teilweise flexiblen Leitungen von den Behältern 32 zu den Sonnenkollektoren 2 geführt sein. Beispielsweise können in einer Behälterbatterie von vier Behältern 32 ein Reinigungsmittel 18, ein Gefrierschutz-Taumittel 19, ein Beschlagsverhinderungsmittel 20 und ein Kühlmittel 21 vorgehalten werden. Die Steuer- und/oder Regelungseinrichtung 10 kann anhand der Sensordaten der genannten Sensoren 11, 12, 13 eine Auswahl der notwendigen Konditionierungsmittel 17 vornehmen, indem definierte Elektromagnetventile oder pneumatisch betätigte Ventile 33 angesteuert und geöffnet und somit ein Abfluss aus dem gewünschten Behälter 32 eingleitet wird. In einer Sammelleitung oder der Zuführleitung 30 wird das ausgewählte Konditionierungsmittel 17 zu einer Verteileinrichtung 34 an den Sonnenkollektor 2 geleitet. Die Verteileinrichtung 34 kann an der jeweiligen Oberkante des Sonnenkollektors 2 angeordnet sein - etwa in Form eines mit einer Vielzahl an Düsen oder Öffnungen versehenen Verteilleitung. In Fig. 1 und Fig. 4 ist die Verteileinrichtung 34 in das Reinigungswerkzeug 16 integriert und benetzt dieses von innen nach außen. Der Betrieb der Vorrichtung 1 im Winter kann vorsehen, dass nach Bildung eines Eis- oder Schneebelags beispielsweise über Nacht zunächst Konditionierungsmittel in Form von Taumittel über die Sonnenkollektoren 2 verteilt oder in das Reinigungswerkzeug 16 eingegeben werden kann. Nach Lösen eines Eisbelages durch das Reinigungswerkzeug 16 und die Räumwerkzeuge 15 auf dem Sonnenkollektor 2 kann der Servomotor 5 in Betrieb gesetzt werden. Schnee- oder Eisbelag wird durch den Wischerarm 4 abgetragen. Das Konditionierungsmittel 17 kann in einem geschlossenen Kreislauf umgewälzt werden, indem an dem Sonnenkollektor 2 oder an der Mehrzahl an Sonnenkollektoren 2 Auffangeinrichtungen 35 angebracht sind. Das Konditionierungsmittel 17 kann aufgefangen und über eine Pumpe 36 und eine Verteileinrichtung dem betreffenden Behälter 32 wieder zugeführt werden.

Als Gefrierschutz- oder Taumittel eignet sich beispielsweise eine vor Ort herstellbare NaCl-Lösung, eine glycolhaltige Flüssigkeit oder dergleichen. Als Beschlagsverhinderungsmittel eignet sich beispielsweise Natriumlactat, Propylenglycol, Glycerin oder Sorbit. Als Kühlmittel eignet sich Regenwasser, welches bekanntlich kalkfrei ist und geringst beschlagsbildend ist.

Anstelle oder zusätzlich zum Auftrag von Gefrierschutz- oder Taumittel ist eine Heizeinrichtung für die Sonnenkollektoren 2 denkbar. Handelt es sich um eine photovoltaische Bauweise der Sonnenkollektoren 2 kann ein elektrischer Rückstrom nachts oder in einem von Schnee bedeckten Zustand der Sonnenkollektoren 2 angewandt werden. Anstatt einer Reihenanordnung der genannten Räum- und Reinigungswerkzeuge 15, 16 an dem Wischerarm 4 kann eine Revolveranordnung der Räum- und Reinigungswerkzeuge an dem Wischerarm 4 vorgesehen sein, verbunden mit einer Drehmöglichkeit des Wischerarms 4 um seine Längsachse.

Die Steuer- und/oder Regelungseinrichtung 10 kann auch dazu angewandt werden, etwa einen kaskadierten Betrieb einer Vielzahl an Servomotoren 5, 37 zu steuern, sodaß beispielsweise eine an einer Dachfläche montierte mehrreihige Sonnenkollektoranlage mit dem Betrieb ihrer Servomotoren in der untersten Reihe beginnt und nachfolgend die weiter oberen Reihen der Servomotoren ihren Betrieb aufnehmen um so einen systematischen Abtrag von Schneebelag von unten nach oben in Bezug auf eine Dachfläche durchzuführen.

In Fig. 6 ist in einem teilweisen Längsschnitt ein weiteres Ausführungsbeispiel einer Vorrichtung 1 zum Entfernen von zumindest Schnee- oder Eisbelag auf zumindest einem Sonnenkollektor 2 gezeigt. Die Vorrichtung 1 besteht in dem gezeigten Ausführungsbeispiel aus einer modulartig aufgebauten Antriebsseite 39 und dem als teleskopierbaren und zudem rotatorisch angetriebenen Wischerarm 4, der insgesamt das Element zum Abtrag von Schnee- oder Eisbelag bildet. Der Wischerarm 4 wird als Ganzes von dem ersten Servomotor 5 rotatorisch angetrieben.

Eine Längsachse 40 des ersten Servomotors 5 ist in der gezeigten Ruheposition des Wischerarms 4 etwa parallel zu einer Längsachse 41 des Wischerarms 4 ausgerichtet. Eine Welle 7 des ersten Servomotors 5 bildet ein Eingangsglied für ein Untersetzungsgetriebe 8, einem Wellgetriebe. Das Untersetzungsgetriebe 8 ist in der Lage, die Drehzahl des ersten Servomotors 5 stark zu untersetzen und ein sehr hohes Drehmoment auf den Wischerarm 4 aufzubringen. Ein Ausgangsglied 9 des Untersetzungsgetriebes 8 ist drehfest mit einem Kegelrad 45 eines Kegelradgetriebes 46 verbunden. Ein weiteres Kegelrad 47 des Kegelradgetriebes 46 ist drehfest mit einem Sockel 48 der Antriebsseite 39 für den Wischerarm 4 verbunden. Der Sockel 48 ist spielfrei in einer Wälzlageranordnung 49 radial und axial in einem Gehäuse 50 gelagert. Zwischen dem Sockel 48 und dem Gehäuse 50 ist in dem in Fig. 6 gezeigten Ausführungsbeispiel ein Axiallager 51 angeordnet, das Teil der Wälzlageranordnung 49 ist.

Der Sockel 48 weist eine Rotationsachse 52 auf, die senkrecht zu der Längsachse 40 des ersten Servomotors 5, der Welle 7 des ersten Servomotors 5 und des Kegelrades 45 ausgerichtet ist. Drehfest mit dem Sockel 48, dessen Querschnitt im Wesentlichen u-förmig gebildet ist, ist ein Triebkopfgehäuse 53 über eine Welle 54 verbunden. Das Triebkopfgehäuse 53 ist im Querschnitt im Wesentlichen u-förmig gebildet, wobei seine seitlichen Wangen 55 die Wangen 56 des Sockels 48 mit Axialspiel umfassen. Der Kantenverlauf der jeweiligen Wangen 55, 56 des Triebkopfgehäuses 53 und des Sockels 48 ist so, dass ein Kippen des Triebkopfgehäuses 53 relativ zu dem Sockel 48 um die Welle 54 in beide Richtungen möglich ist.

An dem Triebkopfgehäuse 53 ist ein Abschnitt 57 des Wischerarmes 4 festgelegt. Der Abschnitt 57 kann durch ein Profilrohr mit kreisförmiger oder von der Kreisform abweichender Querschnittsform gebildet sein. Das Profilrohr kann aus einem Metallwerkstoff oder einem Nicht-Metallwerkstoff, wie etwa einem Faserverbund-Werkstoff gebildet sein. Das teleskopierbare Teil 26 des Wischerarmes 4 ist in dem Abschnitt 57 gleitend mit geringstem Radialspiel geführt. Während des Betriebs der Vorrichtung 1 findet eine rotatorische Bewegung des Wischerarmes 4 und des Abschnitts 57 statt und eine translatorische Teleskopierbewegung des teleskopierbaren Teils 26. So lassen sich mit dem Räumwerkzeug 15 und dem Reinigungswerkzeug 16 an dem Abschnitt 57 und an dem teleskopierbaren Teil 26 rechteckige Flächen von Sonnenkollektoren 2 von Schnee- und Eisbelag befreien und/oder reinigen.

Zur Darstellung der Teleskopierbewegung des teleskopierbaren Teils 26 dient ein zweiter Servomotor 37. Der zweite Servomotor 37 ist ebenso als Elektromotor gebildet. Der zweite Servomotor 37 ist an einem axialen Ende des Triebkopfgehäuses 53 so angeordnet, dass die Wangen 55 den Servomotor 37 im Wesentlichen umschließen.

Die Drehzahl des Servomotors 37 wird von einem weiteren Untersetzungsgetriebe 43 - beispielsweise einem Planetenradgetriebe - untersetzt. Ein Ausgangsglied 44 des Untersetzungsgetriebes 43 ist von einer Spindel 58 gebildet. Die Spindel 58 durchragt axial den Abschnitt 57 des Wischerarmes 4. Ferner durchragt die Spindel 58 eine Mutter 59, die drehfest und axial unverschiebbar an einem axialen Ende 60 des teleskopierbaren Teils 26 festgelegt ist. Der teleskopierbare Teil 26 ist gegenüber dem Abschnitt 57 verdrehgesichert. Somit ist eine Bewegungsschraube 38 zur Darstellung eines Linearantriebes gebildet.

Der zweite Servomotor 37, dessen Untersetzungsgetriebe 43 und die Spindel 58 sind durch das Triebkopfgehäuse 53 und den starren Abschnitt 57 des Wischerarmes 4 vor Witterungseinflüssen geschützt. Das Reinigungswerkzeug 16 und das Räumwerkzeug 15 sind zur Ermöglichung der Teleskopierfunktion des Wischerarmes 4 axial geteilt in dem Sinne, dass eine Teillänge des Reinigungswerkzeuges 16 und des Räumwerkzeuges 15 lösbar und austauschbar an dem teleskopierbaren Teil 26 und eine Teillänge des Reinigungswerkzeuges 16 und des Räumwerkzeuges 15 lösbar und austauschbar an dem Abschnitt 57 festgelegt ist. Im eingefahren Zustand des teleskopierbaren Teils 26 überlagern sich die Teillängen des Reinigungswerkzeuges 16 und des Räumwerkzeuges 15 axial. Zur radialen Anpressung des Reinigungswerkzeuges 16 und des Räumwerkzeuges 15 auf den Sonnenkollektor 2 sind ein oder mehrere Schraubendruckfedern 61 vorgesehen. Die Schraubendruckfeder 61 ist in dem gezeigten Ausführungsbeispiel als zylindrische Schraubendruckfeder gebildet und stützt sich zwischen einer Aufnahme an dem Triebkopfgehäuse 53 und einer Aufnahme an dem Sockel 48 mit radialem Abstand a zu der Welle 54 ab.

### Bezugszeichenliste

- 1: Vorrichtung
- 2: Sonnenkollektor
- 3: Element
- 4: Wischerarm
- 5: Servomotor, erster
- 6: Elektromotor
- 7: Welle
- 8: Untersetzungsgetriebe
- 9: Ausgangsglied
- 10: Steuer- und/oder Regelungseinrichtung
- 11: Temperatursensor
- 12: Feuchtesensor
- 13: Sensor für fallenden Niederschlag
- 14: Speicher
- 15: Räumwerkzeug
- 16: Reinigungswerkzeug
- 17: Konditionierungsmittel
- 18: Reinigungsmittel
- 19: Gefrierschutz- oder Taumittel
- 20: Beschlagsverhinderungsmittel
- 21: Kühlmittel
- 22: Dachfläche
- 23: Gebäude
- 24: Kulissenführung
- 25: Telekopiereinrichtung
- 26: Teil, telekopierbar
- 27,27': Rand, v. 4
- 28: Längsmittelebene, v. 4
- 29: Abstreifwerkzeug
- 30: Zuführleitung
- 31: Öffnung, an 30
- 32: Behälter
- 33: Ventil
- 34: Verteileinrichtung
- 35: Auffangeinrichtung
- 36: Pumpe
- 37: Servomotor, zweiter
- 38: Bewegungsschraube
- 39: Antriebsseite
- 40: Längsachse, v. 5
- 41: Längsachse, v. 4
- 42:
- 43: Untersetzungsgetriebe
- 44: Ausgangsglied
- 45: Kegelrad
- 46: Kegelradgetriebe
- 47: Kegelrad
- 48: Sockel
- 49: Wälzlageranordnung
- 50: Gehäuse
- 51: Axiallager
- 52: Rotationsachse
- 53: Triebkopfgehäuse
- 54: Welle
- 55: Wange, v. 53
- 56: Wange, v. 48
- 57: Abschnitt, v.4
- 58: Spindel
- 59: Mutter
- 60: Ende
- 61: Schraubendruckfeder

- L: Erstreckung, axial, v. 4
- a: Abstand, radial

## Patentansprüche

1. Vorrichtung zum Entfernen von zumindest Schnee- oder Eisbelag auf zumindest einem Sonnenkollektor (2) mit zumindest einem Element (3) zum Abtrag von Schnee- oder Eisbelag, welches über zumindest eine Teilfläche des zumindest einen Sonnenkollektors (2) führbar ist, wobei das zumindest eine Element (3) in der Art eines Wischerarmes (4) gebildet ist und von zumindest einem ersten Servomotor (5) angetrieben, eine translatorische und/oder rotatorische Bewegung über den zumindest einen Sonnenkollektor (2) in der Lage ist, auszuführen, **dadurch gekennzeichnet, dass** ein teleskopierbares Teil (26) des Wischerarmes (4) von einer Teleskopiereinrichtung (25) mit einem zweiten Servomotor (37) längsverschiebbar zu einem, von dem zumindest einen ersten Servomotor (5) angetriebenen Abschnitt (57) des Wischerarmes (4) angetrieben ist.

2. Vorrichtung nach Anspruch 1, **dadurch gekennzeichnet, dass** der Servomotor (5) ein Elektromotor (6) ist und als Gleichstrommotor oder Wechselstrommotor ausgebildet ist, dessen Welle (7) ein Untersetzungsgetriebe (8) in der Art eines Schneckeradgetriebes, Hohlradpaargetriebes, Planetenradgetriebes oder sonstigen Zahnradgetriebes oder Kurvengetriebes antreibt, mit dessen Ausgangsglied (9) der Wischerarm (4) angetrieben ist.

3. Vorrichtung nach Anspruch 1 oder 2, **dadurch gekennzeichnet, dass** der zweite Servomotor (37) das teleskopierbare Teil (26) des Wischerarmes (4) über eine Bewegungsschraube (38) antreibt.

4. Vorrichtung nach einem der Ansprüche 1 bis 3, **dadurch gekennzeichnet, dass** der zumindest eine erste Servomotor (5) von einer Steuer- und/oder Regelungseinrichtung (10) angesteuert ist, die den zumendest ernen ersten Servomotor (5) in Abhängigkeit von Sensorsignalen eines Temperatursensors (11) oder eines Feuchtesensors (12) oder eines Sensors (13), der fallenden Niederschlag auf den zumindest einen Sonnenkollektor (2) erkennen kann, angesteuert ist.

5. Vorrichtung nach Anspruch 4, **dadurch gekennzeichnet, dass** der Sensor (13) zur Erkennung von fallendem Niederschlag ein Radarsensor mit einem Sender und einem Empfänger im Mikrowellen- oder Radarwellenbereich ist.

6. Vorrichtung nach Anspruch 4, **dadurch gekennzeichnet, dass** der zumindest eine erste Servomotor (5) und/oder der zweite Servomotor (37) von der Steuer- und/oder Regelungseinrichtung (10) angesteuert ist, die einen Intervallbetrieb des Wischerarmes (4) ermöglicht, dessen Geschwindigkeit seiner translatorischen oder rotatorischen Bewegung durch die Wahl eines Programmes aus einer Mehrzahl von in einem Speicher (14) abgelegten Programmen vorgebbar ist.

7. Vorrichtung nach einem der Ansprüche 1 bis 6, **dadurch gekennzeichnet, dass** an dem Wischerarm (4) ein Räumwerkzeug (15) und/oder ein Reinigungswerkzeug (16) angebracht ist, die sowohl einen Abtrag von Schnee- oder Eisbelag als auch eine Reinigung des zumindest einen Sonnenkollektors (2) imstande sind durchzuführen.

8. Vorrichtung nach einem der Ansprüche 1 bis 7, **dadurch gekennzeichnet, dass** die Vorrichtung (1) zum Auftrag eines Konditionierungsmittels (17) auf den zumindest einen Sonnenkollektor (2) vorgesehen ist.

9. Vorrichtung nach Anspruch 8, **dadurch gekennzeichnet, dass** das Konditionierungsmittel (17) ein Reinigungsmittel (18), ein Gefrierschutz- oder Taumittel (19), ein Beschlagsverhinderungsmittel (20) oder ein Kühlmittel (21) ist.

10. Vorrichtung nach einem der Ansprüche 1 bis 9, **dadurch gekennzeichnet, dass** an dem Wischerarm (4) zwischen zumindest zwei Räumwerkzeugen (15) die über zumindest seine wesentliche axiale Erstreckung (L) angeordnet sind, zumindest ein Reinigungswerkzeug (16) über zumindest die wesentliche axiale Erstreckung (L) des Wischerarmes (4) angeordnet ist.

11. Vorrichtung nach Anspruch 9, **dadurch gekennzeichnet, dass** Konditionierungsmittel (17) zumindest im Wesentlichen über die axiale Erstreckung (L) des Wischerarmes (4) auf den zumindest einen Sonnenkollektor (2) aufgebracht ist.

12. Vorrichtung nach Anspruch 10, **dadurch gekennzeichnet, dass** das Räum- oder Reinigungswerkzeug (15, 16) an dem Wischerarm (4) lösbar und austauschbar angeordnet ist.

13. Vorrichtung nach Anspruch 9, **dadurch gekennzeichnet, dass** das Konditionierungsmittel (17) in einem geschlossenen Kreislauf von der Vorrichtung (1) über den zumindest einen Sonnenkollektor (2) geführt werden kann.

14. Vorrichtung nach einem der Ansprüche 1 bis 13, **dadurch gekennzeichnet, dass** der zumindest eine Servomotor (5) für den Antrieb von einem oder mehreren Wischerarmen (4) vorgesehen ist und zur Reinigung oder Abtrag von Schnee- oder Eisbelag von mehreren Sonnenkollektoren (2) vorgesehen ist.

## Claims

1. Device for removing at least ice or snow cover from at least one solar collector (2) with at least one element (3) for removal of ice or snow cover, which could be guided over at least a part of the at least one solar collector (2), whereas the at least one element (3) is formed as a wiper arm (4) and powered by at least one first servo motor (5) and is enabled to make translational and/or gyrotary movement on the at least one solar collector (2) **characterized in, that** a telescopable part (26) of the wiper arm (4) is driven by a second servo motor (37) lengthwise to a wiper's arm section (57) which is driven by the at least first servo motor (5).

2. Device as defined in claim 1, wherein the first servo motor (5) is formed as an electric motor as a DC- or AC motor, whose drive shaft (7) drives a reduction gear unit (6) like a snail-wheel gear, a paired internal gear system, a planetary gear reduction or other gear drive or a cam mechanism and its output member (9) drives the wiper arm (4).

3. Device as defined in claim 1 or 2, wherein the second servo motor (37) drives the telescopable part (26) by a spindle drive (36).

4. Device as defined in claims 1 to 3, wherein the at least first servo motor (5) is operated by an open and closed loop control device (10) depending on sensor signals of a temperature sensor (11) or a humidity sensor (12) or a precipitation sensor (13).

5. Device as defined in claim 4, wherein the precipitation sensor (13) is a radar sensor.

6. Device as defined in claim 4, wherein the at least first servo motor (5) and/or the second servo motor (37) is operated by the open and closed loop control device (10) to carry out an interval operation of the wiper arm (4) whose longitudinal speed or rotary velocity is preset by a selection of a program from a memory (14).

7. Device as defined in claims 1 to 6, wherein.the wiper arm (4) carries an implement (15) to remove ice or snow and/or a cleaning implement (16).

8. Device as defined in claims 1 to 7, wherein the device (1) comprises a device to apply a conditioner (17) on the at least one solar collector (2).

9. Device as defined in claim 8, wherein the conditioner (17) is a cleaning agent (18), or an anti-freezing compound (19) or an antifogging agent (20), or cooling means (21).

10. Device as defined in claims 1 to 9, wherein between at least two implements (15) to remove ice or snow, which are arranged across at least a substantial length (L) of the wiper arm (4) is arranged a cleaning implement (16).

11. Device as defined in claim 9, wherein the conditioner (17) is appliqued at least along the length of the wiper arm (4) to the at least one solar collector (2).

12. Device as defined in claim 10, wherein the implement (15) to remove ice or snow and/or a cleaning implement (16) is resolvable and exchangeable arranged at the wiper arm (4).

13. Device as defined in claim 9, wherein the conditioner (17) is guided in a closed circuit from the device (1) over the at least one solar collector (2).

14. Device as defined in claims 1 to 13, wherein the at least one servo motor (5) drives one or several wiper arms (4) to remove ice or snow cover from several solar collectors (2) or to clean several solar collectors (2).

## Revendications

1. Dispositif pour retirer au moins une couche de neige ou de givre sur au moins un collecteur solaire (2) avec au moins un élément (3) d'enlèvement de couche de neige ou de givre lequel peut être guidé sur au moins une surface partielle dudit au moins un collecteur solaire (2), sachant qu'au moins un élément (3) est constitué sous la forme d'un essuie-glace (4) et actionné par ledit au moins un premier servomoteur (5), est capable d'effectuer un mouvement de translation et/ou de rotation sur ledit au moins un collecteur solaire (2), **caractérisé en ce qu'**une pièce télescopique (26) de l'essuie-glace (4) est entraînée d'un dispositif télescopique (25) avec un deuxième servomoteur (37) de façon à être déplacé dans le sens de la longueur vers une section (57) de l'essuie-glace (4) actionnée par ledit au moins un premier servomoteur (5).

2. Dispositif selon la revendication 1, **caractérisé en ce que** le servomoteur (5) est un moteur électrique (6) réalisé comme un moteur à courant continu ou un moteur à courant alternatif dont l'arbre (7) entraîne un démultiplicateur (8) sous la forme d'un engrenage de roue hélicoïdale, d'un engrenage par paire de couronne, d'un engrenage planétaire ou d'un autre engrenage à roue dentée ou à came, avec lequel l'élément de sortie (9) de l'essuie-glace (4) est entraîné.

3. Dispositif selon la revendications1 ou 2, **caractérisé en ce que** le deuxième servomoteur (37) actionne la pièce télescopique (26) de l'essuie-glace (4) par une vis de mouvement (38).

4. Dispositif selon l'une quelconque des revendications 1 à 3, **caractérisé en ce que** ledit au moins un premier servomoteur (5) est commandé par un dispositif de régulation et/ou de commande (10) qui est lui-même commandé avec le au moins premier servomoteur (5) en fonction de signaux de capteur d'un détecteur de température (11) ou d'un détecteur d'humidité (12) ou d'un capteur (13) qui peut identifier une chute de précipitations sur ledit au moins un collecteur solaire (2).

5. Dispositif selon la revendication 4, **caractérisé en ce que** le capteur (13) est un capteur radar équipé d'un émetteur et d'un récepteur au niveau des ondes radar et micro-ondes en vue d'identifier une chute de précipitations.

6. Dispositif selon la revendication 4, **caractérisé en ce que** ledit au moins un premier servomoteur (5) et/ou le deuxième servomoteur (37) est commandé par le dispositif de régulation et/ou de commande (10) permettant à l'essuie-glace de fonctionner par intermittence, et dont la vitesse de son mouvement de translation ou de rotation peut être prédéfinie en sélectionnant un programme parmi une multitude de programmes enregistrés dans la mémoire (14).

7. Dispositif selon l'une quelconque des revendications 1 à 6, **caractérisé en ce qu'**un outil de brossage (15) et/ou un outil de nettoyage (16) est installé sur l'essuie-glace (4) qui est capable d'enlever non seulement la couche de neige ou de givre mais de nettoyer également ledit au moins un collecteur solaire (2).

8. Dispositif selon l'une quelconque des revendications 1 à 7, **caractérisé en ce que** le dispositif (1) est prévu pour appliquer un agent de conditionnement (17) sur ledit au moins un collecteur solaire (2).

9. Dispositif selon la revendication 8, **caractérisé en ce que** l'agent de conditionnement (17) est un produit nettoyant (18), un produit dégivrant ou un antigel (19), un agent de prévention contre la buée (20) ou un réfrigérant (21).

10. Dispositif selon l'une quelconque des revendications 1 à 9, **caractérisé en ce qu'**au niveau de l'essuie-glace (4) entre au moins deux outils de brossage (15) disposés sur au moins son étendue (L) axiale substantielle, au moins un outil de nettoyage (16) est disposé sur au moins l'étendue (L) axiale substantielle de l'essuie-glace (4).

11. Dispositif selon la revendication 9, **caractérisé en ce que** l'agent de conditionnement (17) est appliqué au moins substantiellement sur l'étendue (L) axiale de l'essuie-glace (4) dudit au moins un collecteur solaire (2).

12. Dispositif selon la revendication 10, **caractérisé en ce que** l'outil de brossage ou de nettoyage (15, 16) est disposé de manière amovible et interchangeable sur l'essuie-glace (4).

13. Dispositif selon la revendication 9, **caractérisé en ce que** l'agent de conditionnement (17) peut être amené sur ledit au moins un collecteur solaire (2) par le dispositif (1) dans un circuit fermé.

14. Dispositif selon l'une quelconque des revendications 1 à 13, **caractérisé en ce que** ledit au moins un servomoteur (5) est prévu pour l'entraînement d'un ou de plusieurs essuie-glaces (4) ainsi que pour le nettoyage ou l'enlèvement de couche de neige ou de givre de plusieurs collecteurs solaires (2).
